# EUROPEAN PATENT SPECIFICATION

(11) **EP 4 276 854 B1**
(45) Date of publication and mention of the grant of the patent: **09.04.2025**
(21) Application number: 21918956.0
(22) Date of filing: 27.09.2021
(51) Int. Cl.: G21C 17/032, G21D 3/08, G21C 19/04, G21C 19/00, G21C 15/08, G21C 15/00

(54) **WASTE HEAT DISCHARGE SYSTEM AND FLOW STABILIZATION METHOD**
ABWÄRMEABFÜHRSYSTEM UND STRÖMUNGSSTABILISIERUNGSVERFAHREN
SYSTÈME D'ÉVACUATION DE CHALEUR RÉSIDUELLE ET PROCÉDÉ DE STABILISATION D'ÉCOULEMENT

(30) Priority: 14.01.2021 CN 202110050941
(43) Date of publication of application: 15.11.2023
(73) Proprietor: China Nuclear Power Technology Research Institute Co., Ltd, Shenzhen, Guangdong 518031 (CN); China Nuclear Power Engineering Company Ltd., Shenzen, Gaungdong 518000 (CN); China General Nuclear Power Corporation, Shenzhen, Guangdong 518028 (CN); CGN Power Co., Ltd., Shenzen, Guangdong 518028 (CN)
(72) Inventor: LU, Xianghui, Shenzhen, Guangdong 518031 (CN); LIANG, Huo, Shenzhen, Guangdong 518031 (CN); LUO, Hanyan, Shenzhen, Guangdong 518031 (CN); YANG, Jiang, Shenzhen, Guangdong 518031 (CN); SHEN, Yonggang, Shenzhen, Guangdong 518031 (CN); LIANG, Ren, Shenzhen, Guangdong 518031 (CN)
(74) Representative: Westphal, Mussgnug & Partner, Patentanwälte mbB
(86) International application number: PCT/CN2021/121080
(87) International publication number: WO 2022/151765

(56) References cited:
- CN-A- 101 200 108
- CN-A- 104 848 283
- CN-A- 106 024 079
- CN-A- 106 024 079
- CN-A- 107 644 693
- CN-A- 107 924 199
- CN-A- 107 939 492
- CN-A- 112 786 223
- CN-B- 101 200 108
- CN-U- 211 855 443
- CN-U- 211 855 443
- JP-A- H1 010 271
- US-B2- 10 752 821
- SOMAVATHI T ET AL: "Control of decay heat removal through alternate system in PFBR", NUCLEAR ENGINEERING AND DESIGN, AMSTERDAM, NL, vol. 259, 21 March 2013 (2013-03-21), pages 8 - 13, XP028581618, ISSN: 0029-5493, DOI: 10.1016/J.NUCENGDES.2013.02.036

## Description

### FIELD OF THE INVENTION

The present invention relates to the technical field of safety systems for nuclear power plants, and in particular to a waste heat discharge system and a flow stabilization method.

### DESCRIPTION OF THE RELATED ART

When the reactor is shut down, control rods inserted downward will immediately terminate the fission heat of the fuel rods, but the fission products of the core contain a large number of decayable radioactive elements, so that a large amount of decay heat is still generated in the core after the reactor is shut down. In order to realize reactor cooling and depressurization after the shutdown, a waste heat discharge system must be set to continuously export the waste heat out of the reactor. During the cooling process, if the heat transfer power is low and the condensate water does not fill the return pipe, there will be an obvious gas-liquid interface in the return pipe, the condensate water flows down along the return pipe to impact on the gas-liquid interface, making the interface fluctuate, which results in fluctuation of the flow rate of the condensate water. This can easily cause a large load force on the pipe, so that the pipe has the risk of rupture. When the temperature of the condensate water at an outlet of the condenser is not uniform and fluctuates greatly, the downstream pipe can be subjected to a great thermal fatigue impact, which likewise makes the pipe have the risk of rupture.

Publications CN 101 200 108 B, SOMAVATHI ET AL: "Control of decay heat removal through alternate system in PFBR", NUCLEAR ENGINEERING AND DESIGN, AMSTERDAM, NL, vol. 259, 21 March 2013, pages 8-13, XP028581618, and CN 104 848 283 A are considered to be relevant to this application.

### SUMMARY OF THE INVENTION

The technical problem to be solved by the present invention is to provide a waste heat discharge system and a flow stabilization method. This problem is solved by a waste heat discharge system having the features of claim 1 and by a flow stabilization method having the features of claim 13.

The technical solution adopted by the present invention to solve its technical problem is:
A waste heat discharge system, including a flow control device, it further includes a heat exchange device and a temperature buffer tank sequentially connected in series with a steam generator, with the heat exchange device, the temperature buffer tank, and the steam generator sequentially decreasing in height;
the flow control device comprises a first pressure sensor, a second pressure sensor, a temperature sensor, a flow control valve, and a controller. The first pressure sensor, the second pressure sensor, the temperature sensor, and the flow control valve are disposed in a return line of a condensate liquid;
the first pressure sensor and the second pressure sensor are disposed sequentially along a return direction of the condensate liquid, and the first pressure sensor, the second pressure sensor and the temperature sensor are disposed upstream of the flow control valve;
the first pressure sensor, the second pressure sensor, the temperature sensor and the flow control valve are each communicatively connected to the controller
the first pressure sensor is provided on a first pipeline connecting the heat exchange device and the temperature buffer tank, and the second pressure sensor, the temperature sensor, and the flow control valve are all provided on a second pipeline connecting the temperature buffer tank and a main feedwater line.

Preferably, the temperature buffer tank is filled with a liquid, comprises an inlet connected to the first pipeline, and is connected to the main feedwater line via the second pipeline, so as to be fluidly connected to the steam generator.

Preferably, a vertical distance between the heat exchange device and the temperature buffer tank is less than a vertical distance between the temperature buffer tank and the steam generator, the first pressure sensor is provided close to an outlet of the heat exchange device, and the second pressure sensor is provided adjacent the flow control valve.

Preferably, the temperature sensor, the second pressure sensor and the flow control valve are provided sequentially on the second pipeline along a flow direction of the liquid, and an outlet isolation valve for intercepting the liquid is further provided between the flow control valve and the main feedwater line.

Preferably, the heat exchange device is connected to the main steam line via a third pipeline, and an inlet isolation valve for intercepting steam is further provided between the heat exchange device and a main steam line.

Preferably, at least two such inlet isolation valves are provided in parallel on the third pipeline, and at least two such outlet isolation valves are provided in parallel on the second pipeline.

Preferably, the heat exchange device comprises heat exchange tubes and a heat trap water tank filled with a cooling liquid, the heat exchange tubes being submerged in the cooling liquid, and the first pipeline and the third pipeline being each connected to the heat exchange tubes.

Preferably, the heat trap water tank is further provided with an air window at a top thereof for evaporating of the cooling liquid, and the heat exchanger tubes are C-shaped heat exchange tubes.

Preferably, the liquid in the temperature buffer tank is liquid water, and the liquid water fills the temperature buffer tank when the waste heat discharge system has not yet started working.

Preferably, the first pipeline is connected to the temperature buffer tank at a top surface of the temperature buffer tank, the second pipeline is connected to the temperature buffer tank at a side surface of the temperature buffer tank, and the second pipeline is connected to a upper portion of the side surface of the temperature buffer tank.

Preferably, the first pressure sensor is provided at an outlet of the condensate liquid, and the second pressure sensor is provided adjacent the flow control valve.

Preferably, the first pressure sensor, the temperature sensor, the second pressure sensor and the flow control valve are sequentially provided on a return line of the condensate liquid along the return direction of the condensate.

The present invention further provides a flow stabilization method for a waste heat discharge system, the waste heat discharge system includes the waste heat discharge system according to any one of the above, and the method further includes the following steps:
S1, starting the waste heat discharge system and setting a target water level H, wherein the target water level H is equal to a height difference Δ*H* between the first pressure sensor and the second pressure sensor;
S2, the controller receiving the pressure data of corresponding positions measured by the first pressure sensor and the second pressure sensor, and the temperature value detected by the temperature sensor, respectively, and obtaining a relative water level h in the line at this time according to formula Δ*P = ρgh* after obtaining the density of the condensate water by calculation;
S3, the controller comparing a difference between the relative water level h and the target water level H, so as to control a valve opening of the flow control valve so that the relative water level h is equal to the target water level H, or the difference between the relative water level h and the target water level H is within a preset error range;
S4, when h < H, the controller automatically controlling the flow control valve to reduce the valve opening;
S5, when h > H, the controller automatically controlling the flow control valve to increase the valve opening.

Preferably, the method further includes a method of adjusting the heat discharge power of the waste heat discharge system, comprising the following steps:
S1, starting the waste heat discharge system;
S2, when reducing the heat discharge power of the waste heat discharge system is needed, setting a target water level H being greater than the height difference Δ*H* between the first pressure sensor and the second pressure sensor, raising the water level in the first pipeline until the heat exchange tubes are partially submerged by reducing the opening of the flow control valve through the controller, to reduce a heat exchange area of the heat exchange tubes so as to reduce the heat discharge power of the waste heat discharge system;
S3, when increasing the heat discharge power of the waste heat discharge system is needed, decreasing the value of the target water level H by increasing the opening of the flow control valve through the controller, to decrease the height of the water level within the heat exchange tubes to increase the heat exchange area of the heat exchange tubes, so as to increase the heat discharge power of the waste heat discharge system.

The present invention has the following beneficial effects: the present invention is capable of automatically controlling the liquid level in the return line of the condensate liquid by means of a flow control device formed by the first pressure sensor, the second pressure sensor, the temperature sensor, the flow control valve and the controller; in addition, by setting the flow control device in the waste heat discharge system, the liquid level is maintained near the outlet of the heat exchanger, thereby preventing the condensate water from impacting on a gas-liquid interface, achieving the effect of eliminating the fluctuation of the flow rate of the condensate water, and realizing the flow stabilization effect of the waste heat discharge system.

### BRIEF DESCRIPTION OF THE DRAWINGS

The present invention will be further described below with reference to the accompanying drawings and embodiments. In the figures:
Fig. 1 is a schematic diagram showing a structure of a flow control device that is not covered by the claims;
Fig. 2 is a schematic diagram showing a structure of a waste heat discharge system according to one embodiment of the present invention.

### DETAILED DESCRIPTION OF EMBODIMENTS

In order to have a better understanding of the technical features, purposes and effects of the present invention, specific embodiments of the present invention are described in detail with reference to the accompanying drawings.

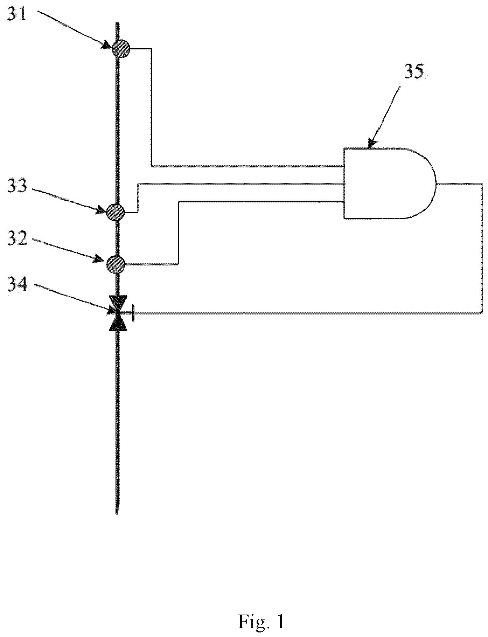

The present invention provides a flow control device which can be used as a flow stabilization device for improving operational flow stability of a passive system and reducing the probability of damage to the system piping. Specifically, with reference to Fig. 1, which is not covered by the claims, the flow control device provided by the present invention, which can be used in a passive system, may specifically include a first pressure sensor 31, a second pressure sensor 32, a temperature sensor 33, a flow control valve 34, and a controller 35, wherein the first pressure sensor 31, the second pressure sensor 32, the temperature sensor 33, and the flow control valve 34 are all communicatively connected to the controller 35.

Further, the first pressure sensor 31, the second pressure sensor 32, the temperature sensor 33, and the flow control valve 34 are all disposed on a return line of condensate liquid. The first pressure sensor 31 and the second pressure sensor 32 are disposed sequentially along a return direction of the condensate liquid, and the first pressure sensor 31, the second pressure sensor 32, and the temperature sensor 33 are all disposed upstream of the flow control valve 34, namely located on a pipeline on an inlet side of the flow control valve 34. The first pressure sensor 31 may be provided close to an outlet of a condensate water source, and the second pressure sensor 32 may be installed close to the flow control valve 34, such that the first pressure sensor 31 and the second pressure sensor 32 may measure an ambient pressure of the return line at their installation locations, and the temperature sensor 33 may measure the temperature of the liquid within the return line, and the first pressure sensor 31, the second pressure sensor 32 and the temperature sensor 33 transmit the measurement data to the controller 35, respectively.

In some embodiments, the first pressure sensor 31 is preferably located at the outlet of the condensate liquid, i.e., near the height at which the condensate liquid enters the return line, and the second pressure sensor 32 is disposed adjacent the flow control valve 34, whereby the water level in the return line is always maintained at such a height that the first pressure sensor 31 is submerged, i.e., at the height of the condensate water source, by automatically controlling a valve opening of the flow control valve 34. As such, the flow rate of the returned condensate liquid can be maintained stable.

Further, the first pressure sensor 31, the temperature sensor 33, the second pressure sensor 32, and the flow control valve 34 may be sequentially disposed on the return line of the condensate liquid along the return direction of the condensate liquid.

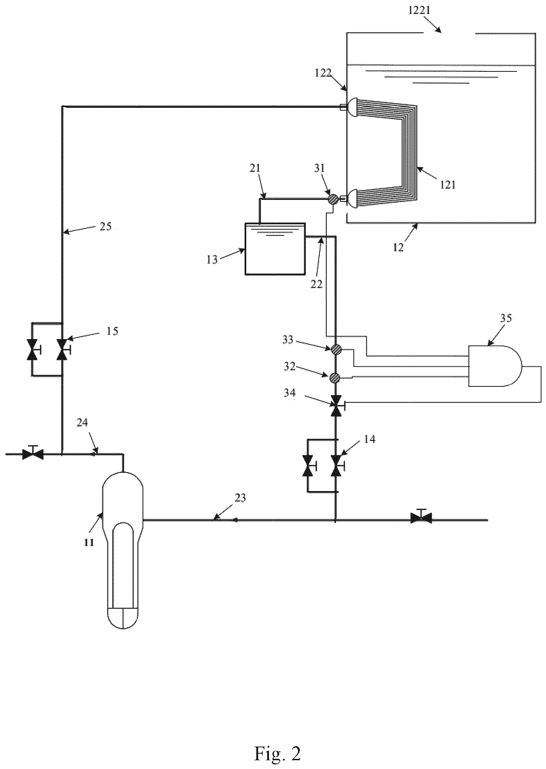

The present invention further provides a waste heat discharge system comprising the above-described flow control device for exporting reactor waste heat. Specifically, with reference to Fig. 2, the waste heat discharge system is connected between a main steam line 24 and a main feedwater line 23 of a steam generator 11. A heat exchange device 12, a temperature buffer tank 13 and the steam generator 11 sequentially decrease in height. In some embodiments, a vertical distance between the heat exchange device 12 and the temperature buffer tank 13 is less than a vertical distance between the temperature buffer tank 13 and the steam generator 11.

Further, the heat exchange device 12 specifically includes heat exchange tubes 121 and a heat trap tank 122 containing a cooling liquid, the heat exchange tubes 121 being submerged in the cooling liquid for condensing the steam into a liquid. In some embodiments, the cooling liquid in the heat trap tank 122 is cooling water, and a gas window 1221 is provided at a top of the heat trap tank 122 for evaporating of the cooling liquid. In some embodiments, the heat transfer tubes 121 are provided as a C-shaped heat transfer tube bundle, two ends of which are connected to the steam generator 11 and the temperature buffer tank 13, respectively. In some embodiments, the temperature buffer tank 13 is filled with a liquid, specifically liquid water. The liquid water fills the temperature buffer tank 13 while the flow control device has not yet begun to operate. Further, the temperature buffer tank 13 is fluidly connected to the heat exchange tubes 121 via a first pipeline 21 and to the main feedwater line 23 via a second pipeline 22; the heat exchange device 12 is connected to the main steam line 24 via a third pipeline 25, such that the steam generator 11, the heat exchange device 12, and the temperature buffer tank 13 form a closed loop.

In order to stabilize the flow of the waste heat discharge system, in the present invention, the above-described flow control device is provided in the waste heat system. Specifically, the first pipeline 21 is provided with the first pressure sensor 31, and the second pipeline 22 is provided with the second pressure sensor 32. In addition, the second pipeline 22 is provided with the temperature sensor 33 for detecting the temperature of the liquid in the second pipeline 22, and the flow control valve 34 for controlling the flow of the liquid in the second pipeline 22. In the present invention, the first pressure sensor 31, the second pressure sensor 32, the temperature sensor 33, and the flow control valve 34 are each communicatively connected to the controller 35. Further, in some embodiments, the first pressure sensor 31 is disposed at an outlet of the heat exchange tubes 121, and the temperature sensor 33, the second pressure sensor 32, and the flow control valve 34 are disposed sequentially on the second pipeline 22 along a flow direction of the liquid. Further, an outlet isolation valve 14 for intercepting the liquid is also provided between the flow control valve 34 and the main feedwater line 23, and an inlet isolation valve 15 for intercepting the vapor is also provided on the third pipeline 25. In some embodiments, at least two inlet isolation valves 15 are connected in parallel on the third pipeline 25, and at least two outlet isolation valves 14 are connected in parallel on the second pipeline 22, such that in the event of a failure of one of the valves where the one valve is jammed and cannot be opened, the other valve can be opened as needed, reducing the chance of system failure and improving equipment availability.

Further, the first pipeline 21 is fluidly connected to the temperature buffer tank 13 at a top surface thereof, and the second pipeline 22 is connected to the temperature buffer tank 13 at a side surface thereof. In some embodiments, the second pipeline 22 is connected to an upper portion of the side surface of the temperature buffer tank 13, such that the water level of the temperature buffer tank 13 is always maintained near the height of the second pipeline 22, and a certain volume of stored water is always present in the temperature buffer tank 13. When the condensate water flowing down from the first pipeline 21 enters the temperature buffer tank 13, it strikes the stored water in the temperature buffer tank 13, forming a vortex inside the tank, so that the stored water inside the tank mixes sufficiently with the condensate water from the outlet of the condensate pipe, which reduces the unevenness and fluctuation of the temperature of the condensate water inside the tank, providing a temperature buffer function, thereby reducing the thermal impact of the condensate water on the second pipeline 22.

Further, the present invention also provides a flow stabilization method for a waste heat discharge system, including the waste heat discharge system described above, wherein the method further includes the following steps:
S1, starting the waste heat discharge system and setting a target water level H, wherein the target water level H is equal to a height difference Δ*H* between the first pressure sensor 31 and the second pressure sensor 32;
S2, the controller 35 receiving the pressure data of the corresponding locations measured by the first pressure sensor 31 and the second pressure sensor 32 and the temperature value detected by the temperature sensor 33, respectively, and obtaining a relative water level h in the line at this time according to formula Δ*P = ρgh* after obtaining the density of the condensate water by calculation;
S3, the controller 35 controlling the valve opening of the flow control valve 34 by comparing a difference between the relative water level h and the target water level H, such that the relative water level h is equal to the target water level H, or the difference between the relative water level h and the target water level H is within a preset error range;
S4, when h < H, the controller 35 automatically controlling the flow control valve 34 to narrow the valve opening, making the water level in the line rise to the target water level H;
S5, when h > H, the controller 35 automatically controlling the flow control valve 34 to increase the valve opening, making the water level in the pipeline fall to the target water level H.

By means of the above flow stabilization method, the water level in this waste heat discharge system can be maintained near the first pressure sensor 31, i.e., near the condensate pipeline outlet, which can eliminate the fluctuation of the flow rate of the condensate water in the pipeline.

Further, the flow stabilization method may also include a method of adjusting the heat discharge power of the waste heat discharge system, and may specifically include the following steps:
S1, starting the waste heat discharge system;
S2, when reducing the heat discharge power of the waste heat discharge system is needed, setting a target water level H such that the target water level H is greater than a height difference Δ*H* between the first pressure sensor 31 and the second pressure sensor 32, and raising the water level in the first pipeline 21 until the heat exchange tubes 121 are partially submerged by reducing the opening of the flow control valve 34 through the controller 35, so as to reduce the heat exchange area of the heat exchange tubes 121;
S3, when increasing the heat discharge power of the waste heat discharge system is needed, decreasing the value of the target water level H, decreasing the height of the water level within the heat exchanger tubes 121 by increasing the opening of the flow control valve 34 through the controller 35, so as to increase the heat exchange area of the heat exchanger tubes 121.

By changing the length of the section of the heat exchanger tube 121 being submerged, which is equivalent to changing a condensing area of the heat exchanger tubes 121, the purpose of controlling the heat discharge power of the waste heat discharge system can be achieved.

The waste heat discharge system and the flow stabilization method proposed in the present invention can be applied to various types of commercial pressurized water reactors to cope with various accidental working conditions and ensure the safe discharge of reactor waste heat. For example, it can be applied to the accidental condition of power failure of the whole plant, which can ensure the safety of the reactor in the event of power loss, improving the safety performance of the nuclear power plant.

The above embodiments are only several embodiments of the present invention, and their descriptions are relatively specific and detailed, but they should not be construed as a limitation to the patent scope of the invention. It should be noted that, for people of ordinary skill in the art, on the premise of not departing from the concept of the present invention, various deformations and improvements can be made, which all belong to the protection scope of the present invention. Therefore, the protection scope of the present invention patent shall be determined according to the appended claims.

## Claims

1. A waste heat discharge system, **characterized in that** it comprises a flow control device, a heat exchange device (12) and a temperature buffer tank (13), wherein the heat exchange device (12) and the temperature buffer tank (13) are sequentially connected in series with a steam generator (11), the heat exchange device (12), the temperature buffer tank (13), and the steam generator (11) sequentially decreasing in height;
the flow control device comprises a first pressure sensor (31), a second pressure sensor (32), a temperature sensor (33), a flow control valve (34), and a controller (35), wherein the first pressure sensor (31), the second pressure sensor (32), the temperature sensor (33), and the flow control valve (34) are disposed in a return line of a condensate liquid;
the first pressure sensor (31) and the second pressure sensor (32) are disposed sequentially along a return direction of the condensate liquid, and the first pressure sensor (31), the second pressure sensor (32), and the temperature sensor (33) are disposed upstream of the flow control valve (34);
the first pressure sensor (31), the second pressure sensor (32), the temperature sensor (33), and the flow control valve (34) are each communicatively connected to the controller (35); and
the first pressure sensor (31) is provided on a first pipeline (21) connecting the heat exchange device (12) and the temperature buffer tank (13), and the second pressure sensor (32), the temperature sensor (33), and the flow control valve (34) are all provided on a second pipeline (22) connecting the temperature buffer tank (13) and a main feedwater line (23).

2. The waste heat discharge system according to claim 1, **characterized in that** the temperature buffer tank (13) is filled with a liquid, comprises an inlet connected to the first pipeline (21), and is connected to the main feedwater line (23) via the second pipeline (22), so as to be fluidly connected to the steam generator (11).

3. The waste heat discharge system according to claim 2, **characterized in that** a vertical distance between the heat exchange device (12) and the temperature buffer tank (13) is less than a vertical distance between the temperature buffer tank (13) and the steam generator (11), the first pressure sensor (31) is provided close to an outlet of the heat exchange device (12), and the second pressure sensor (32) is provided adjacent the flow control valve (34).

4. The waste heat discharge system according to claim 3, **characterized in that** the temperature sensor (33), the second pressure sensor (32) and the flow control valve (34) are provided sequentially on the second pipeline (22) along a flow direction of the liquid, and an outlet isolation valve (14) for intercepting the liquid is further provided between the flow control valve (34) and the main feedwater line (23).

5. The waste heat discharge system according to claim 4, **characterized in that** the heat exchange device (12) is connected to the main steam line (24) via a third pipeline (25), and an inlet isolation valve (15) for intercepting steam is further provided between the heat exchange device (12) and a main steam line (24).

6. The waste heat discharge system according to claim 5, **characterized in that** at least two such inlet isolation valves (15) are provided in parallel on the third pipeline (25), and at least two such outlet isolation valves (14) are provided in parallel on the second pipeline (22).

7. The waste heat discharge system according to claim 5, **characterized in that** the heat exchange device (12) comprises heat exchange tubes (121) and a heat trap water tank (122) filled with a cooling liquid, the heat exchange tubes (121) being submerged in the cooling liquid, and the first pipeline (21) and the third pipeline (25) being each connected to the heat exchange tubes (121).

8. The waste heat discharge system according to claim 7, **characterized in that** the heat trap water tank (122) is further provided with an air window (1221) at a top thereof for evaporating of the cooling liquid, and the heat exchanger tubes (121) are C-shaped heat exchange tubes.

9. The waste heat discharge system according to claim 2, **characterized in that** the liquid in the temperature buffer tank (13) is liquid water, and the liquid water fills the temperature buffer tank (13) when the waste heat discharge system has not yet started working.

10. The waste heat discharge system according to claim 9, **characterized in that** the first pipeline (21) is connected to the temperature buffer tank (13) at a top surface of the temperature buffer tank (13), the second pipeline (22) is connected to the temperature buffer tank (13) at a side surface of the temperature buffer tank (13), and the second pipeline (22) is connected to an upper portion of the side surface of the temperature buffer tank (13).

11. The waste heat discharge system according to claim 1, **characterized in that** the first pressure sensor (31) is provided at an outlet of the condensate liquid, and the second pressure sensor (32) is provided adjacent the flow control valve (34).

12. The waste heat discharge system according to claim 1, **characterized in that** the first pressure sensor (31), the temperature sensor (33), the second pressure sensor (32), and the flow control valve (34) are sequentially provided on a return line of the condensate liquid along the return direction of the condensate.

13. A flow stabilization method for a waste heat discharge system, **characterized in that** the waste heat discharge system comprises the waste heat discharge system according to any one of claims 1-12, the method further comprising the following steps:
S1, starting the waste heat discharge system and setting a target water level H, wherein the target water level H is equal to a height difference Δ*H* between the first pressure sensor (31) and the second pressure sensor (32);
S2, the controller (35) receiving pressure data of corresponding positions measured by the first pressure sensor (31) and the second pressure sensor (32), and a temperature value detected by the temperature sensor (33), respectively, and obtaining a relative water level h in the line at this time according to formula Δ*P = ρgh* after obtaining the density of the condensate water by calculation;
S3, the controller (35) comparing a difference between the relative water level h and the target water level H, so as to control a valve opening of the flow control valve so that the relative water level h is equal to the target water level H, or the difference between the relative water level h and the target water level H is within a preset error range;
S4, when h < H, the controller (35) automatically controlling the flow control valve to reduce the valve opening;
S5, when h > H, the controller (35) automatically controlling the flow control valve to increase the valve opening.

14. The flow stabilization method for a waste heat discharge system according to claim 13, **characterized in that** it further comprises a method of adjusting the heat discharge power of the waste heat discharge system, comprising the following steps:
S1, starting the waste heat discharge system;
S2, when reducing the heat discharge power of the waste heat discharge system is needed, setting a target water level H being greater than the height difference Δ*H* between the first pressure sensor (31) and the second pressure sensor (32), raising the water level in the first pipeline (21) until the heat exchange tubes (121) are partially submerged by reducing the opening of the flow control valve (34) through the controller (35), to reduce a heat exchange area of the heat exchange tubes (121) so as to reduce the heat discharge power of the waste heat discharge system;
S3, when increasing the heat discharge power of the waste heat discharge system is needed, decreasing the value of the target water level H by increasing the opening of the flow control valve (34) through the controller (35), to decrease the height of the water level within the heat exchange tubes (121) to increase the heat exchange area of the heat exchange tubes (121), so as to increase the heat discharge power of the waste heat discharge system.

## Patentansprüche

1. Abwärmeabführsystem, **dadurch gekennzeichnet, dass** es eine Strömungssteuervorrichtung, eine Wärmeaustauschvorrichtung (12) und einen Temperaturpuffertank (13) umfasst, wobei die Wärmeaustauschvorrichtung (12) und der Temperaturpuffertank (13) nacheinander in Reihe mit einem Dampferzeuger (11) verbunden sind, wobei die Wärmeaustauschvorrichtung (12), der Temperaturpuffertank (13) und der Dampferzeuger (11) nacheinander in der Höhe abnehmen;
die Strömungssteuervorrichtung einen ersten Drucksensor (31), einen zweiten Drucksensor (32), einen Temperatursensor (33), ein Strömungssteuerventil (34) und eine Steuerung (35) umfasst, wobei der erste Drucksensor (31), der zweite Drucksensor (32), der Temperatursensor (33) und das Strömungssteuerventil (34) in einer Rückführleitung einer Kondensatflüssigkeit angeordnet sind;
der erste Drucksensor (31) und der zweite Drucksensor (32) nacheinander entlang einer Rückführrichtung der Kondensatflüssigkeit angeordnet sind und der erste Drucksensor (31), der zweite Drucksensor (32) und der Temperatursensor (33) stromaufwärts des Strömungssteuerventils (34) angeordnet sind;
der erste Drucksensor (31), der zweite Drucksensor (32), der Temperatursensor (33) und das Strömungssteuerventil (34) jeweils zur Kommunikation mit der Steuerung (35) verbunden sind; und
der erste Drucksensor (31) an einer ersten Rohrleitung (21), die die Wärmeaustauschvorrichtung (12) und den Temperaturpuffertank (13) verbindet, bereitgestellt ist, und der zweite Drucksensor (32), der Temperatursensor (33) und das Strömungssteuerventil (34) alle an einer zweiten Rohrleitung (22), die den Temperaturpuffertank (13) und eine Haupt-Speisewasserleitung (23) verbindet, bereitgestellt sind.

2. Abwärmeabführsystem nach Anspruch 1, **dadurch gekennzeichnet, dass** der Temperaturpuffertank (13) mit einer Flüssigkeit gefüllt ist, einen mit der ersten Rohrleitung (21) verbundenen Einlass aufweist und über die zweite Rohrleitung (22) mit der Haupt-Speisewasserleitung (23) verbunden ist, um in Fluidverbindung mit dem Dampferzeuger (11) zu stehen.

3. Abwärmeabführsystem nach Anspruch 2, **dadurch gekennzeichnet, dass** ein vertikaler Abstand zwischen der Wärmeaustauschvorrichtung (12) und dem Temperaturpuffertank (13) kleiner als ein vertikaler Abstand zwischen dem Temperaturpuffertank (13) und dem Dampferzeuger (11) ist, der erste Drucksensor (31) nahe einem Auslass der Wärmeaustauschvorrichtung (12) bereitgestellt ist und der zweite Drucksensor (32) benachbart zu dem Strömungssteuerventil (34) bereitgestellt ist.

4. Abwärmeabführsystem nach Anspruch 3, **dadurch gekennzeichnet, dass** der Temperatursensor (33), der zweite Drucksensor (32) und das Strömungssteuerventil (34) nacheinander an der zweiten Rohrleitung (22) entlang einer Strömungsrichtung der Flüssigkeit bereitgestellt sind und ferner zwischen dem Strömungssteuerventil (34) und der Haupt-Speisewasserleitung (23) ein Auslassisolierventil (14) zum Auffangen der Flüssigkeit bereitgestellt ist.

5. Abwärmeabführsystem nach Anspruch 4, **dadurch gekennzeichnet, dass** die Wärmeaustauschvorrichtung (12) über eine dritte Rohrleitung (25) mit der Haupt-Dampfleitung (24) verbunden ist und zwischen der Wärmeaustauschvorrichtung (12) und einer Haupt-Dampfleitung (24) ferner ein Einlassisolierventil (15) zum Auffangen von Dampf bereitgestellt ist.

6. Abwärmeabführsystem nach Anspruch 5, **dadurch gekennzeichnet, dass** an der dritten Rohrleitung (25) mindestens zwei derartige Einlassisolierventile (15) parallel bereitgestellt sind und an der zweiten Rohrleitung (22) mindestens zwei derartige Auslassisolierventile (14) parallel bereitgestellt sind.

7. Abwärmeabführsystem nach Anspruch 5, **dadurch gekennzeichnet, dass** die Wärmeaustauschvorrichtung (12) Wärmeaustauschrohre (121) und einen mit einer Kühlflüssigkeit gefüllten Wärmefallen-Wassertank (122) umfasst, wobei die Wärmeaustauschrohre (121) in die Kühlflüssigkeit eingetaucht sind und die erste Rohrleitung (21) und die dritte Rohrleitung (25) jeweils mit den Wärmeaustauschrohren (121) verbunden sind.

8. Abwärmeabführsystem nach Anspruch 7, **dadurch gekennzeichnet, dass** der Wärmefallen-Wassertank (122) ferner an seiner Oberseite mit einem Luftfenster (1221) zum Verdampfen der Kühlflüssigkeit versehen ist und die Wärmeaustauschrohre (121) C-förmige Wärmeaustauschrohre sind.

9. Abwärmeabführsystem nach Anspruch 2, **dadurch gekennzeichnet, dass** die Flüssigkeit in dem Temperaturpuffertank (13) flüssiges Wasser ist und das flüssige Wasser den Temperaturpuffertank (13) füllt, wenn das Abwärmeabführsystem noch nicht angefangen hat zu arbeiten.

10. Abwärmeabführsystem nach Anspruch 9, **dadurch gekennzeichnet, dass** die erste Rohrleitung (21) an einer Oberfläche des Temperaturpuffertanks (13) mit dem Temperaturpuffertank (13) verbunden ist, die zweite Rohrleitung (22) an einer Seitenfläche des Temperaturpuffertanks (13) mit dem Temperaturpuffertank (13) verbunden ist und die zweite Rohrleitung (22) mit einem oberen Abschnitt der Seitenfläche des Temperaturpuffertanks (13) verbunden ist.

11. Abwärmeabführsystem nach Anspruch 1, **dadurch gekennzeichnet, dass** der erste Drucksensor (31) an einem Auslass der Kondensatflüssigkeit bereitgestellt ist und der zweite Drucksensor (32) benachbart zu dem Strömungssteuerventil (34) bereitgestellt ist.

12. Abwärmeabführsystem nach Anspruch 1, **dadurch gekennzeichnet, dass** der erste Drucksensor (31), der Temperatursensor (33), der zweite Drucksensor (32) und das Strömungssteuerventil (34) nacheinander an einer Rückführleitung der Kondensatflüssigkeit entlang der Rückführrichtung des Kondensats bereitgestellt sind.

13. Strömungsstabilisierungsverfahren für ein Abwärmeabführsystem, **dadurch gekennzeichnet, dass** das Abwärmeabführsystem das Abwärmeabführsystem nach einem der Ansprüche 1-12 umfasst, wobei das Verfahren ferner die folgenden Schritte umfasst:
S1, Starten des Abwärmeabführsystems und Festlegen eines Soll-Wasserpegels H, wobei der Soll-Wasserpegel H gleich einer Höhendifferenz Δ*H* zwischen dem ersten Drucksensor (31) und dem zweiten Drucksensor (32) ist;
S2, Empfangen von Druckdaten entsprechender Positionen, die durch den ersten Drucksensor (31) und den zweiten Drucksensor (32) gemessen werden, bzw. eines Temperaturwerts, der durch den Temperatursensor (33) erfasst wird, durch die Steuerung (35) und Erlangen eines relativen Wasserpegels h in der Leitung zu diesem Zeitpunkt gemäß der Formel Δ*P* = *ρgh* nach Erlangen der Dichte des Kondensatwassers durch Berechnung;
S3, Vergleichen einer Differenz zwischen dem relativen Wasserpegel h und dem Soll-Wasserpegel H durch die Steuerung (35), um eine Ventilöffnung des Strömungssteuerventils so zu steuern, dass der relative Wasserpegel h gleich dem Soll-Wasserpegel H ist oder die Differenz zwischen dem relativen Wasserpegel h und dem Soll-Wasserpegel H innerhalb eines vorab festgelegten Fehlerbereichs liegt;
S4, wenn h < H ist, automatisches Steuern des Strömungssteuerventils durch die Steuerung (35), um die Ventilöffnung zu reduzieren;
S5, wenn h > H ist, automatisches Steuern des Strömungssteuerventils durch die Steuerung (35), um die Ventilöffnung zu vergrößern.

14. Strömungsstabilisierungsverfahren für ein Abwärmeabführsystem nach Anspruch 13, **dadurch gekennzeichnet, dass** es ferner ein Verfahren zum Einstellen der Wärmeabführleistung des Abwärmeabführsystems umfasst, das die folgenden Schritte umfasst:
S1, Starten des Abwärmeabführsystems;
S2, wenn ein Reduzieren der Wärmeabführleistung des Abwärmeabführsystems erforderlich ist, Festlegen, dass ein Soll-Wasserpegel H größer als die Höhendifferenz Δ*H* zwischen dem ersten Drucksensor (31) und dem zweiten Drucksensor (32) ist, Anheben des Wasserpegels in der ersten Rohrleitung (21), bis die Wärmeaustauschrohre (121) teilweise eingetaucht sind, durch Reduzieren der Öffnung des Strömungssteuerventils (34) durch die Steuerung (35), um eine Wärmeaustauschfläche der Wärmeaustauschrohre (121) zu reduzieren, um die Wärmeabführleistung des Abwärmeabführsystems zu reduzieren;
S3, wenn ein Erhöhen der Wärmeabführleistung des Abwärmeabführsystems erforderlich ist, Verringern des Wertes des Soll-Wasserpegels H durch Vergrößern der Öffnung des Strömungssteuerventils (34) durch die Steuerung (35), um die Höhe des Wasserpegels innerhalb der Wärmeaustauschrohre (121) zu verringern, um die Wärmeaustauschfläche der Wärmeaustauschrohre (121) zu vergrößern, um die Wärmeabführleistung des Abwärmeabführsystems zu erhöhen.

## Revendications

1. Système d'évacuation de chaleur résiduelle, **caractérisé en ce qu'**il comprend un dispositif de régulation de débit, un dispositif d'échange de chaleur (12) et un réservoir tampon de température (13), dans lequel le dispositif d'échange de chaleur (12) et le réservoir tampon de température (13) sont connectés séquentiellement en série avec un générateur de vapeur (11), le dispositif d'échange de chaleur (12), le réservoir tampon de température (13) et le générateur de vapeur (11) diminuant séquentiellement en hauteur ;
le dispositif de régulation de débit comprend un premier capteur de pression (31), un second capteur de pression (32), un capteur de température (33), une vanne de régulation de débit (34) et un dispositif de commande (35), dans lequel le premier capteur de pression (31), le second capteur de pression (32), le capteur de température (33) et la vanne de régulation de débit (34) sont disposés dans une conduite de retour d'un liquide de condensation ;
le premier capteur de pression (31) et le second capteur de pression (32) sont disposés séquentiellement le long d'une direction de retour du liquide de condensation, et le premier capteur de pression (31), le second capteur de pression (32) et le capteur de température (33) sont disposés en amont de la vanne de régulation de débit (34) ;
le premier capteur de pression (31), le second capteur de pression (32), le capteur de température (33) et la vanne de régulation de débit (34) sont chacun connectés en communication au dispositif de commande (35) ; et
le premier capteur de pression (31) est prévu sur une première canalisation (21) reliant le dispositif d'échange de chaleur (12) et le réservoir tampon de température (13), et le second capteur de pression (32), le capteur de température (33) et la vanne de régulation de débit (34) sont tous prévus sur une deuxième canalisation (22) reliant le réservoir tampon de température (13) et une conduite d'alimentation en eau principale (23).

2. Système d'évacuation de chaleur résiduelle selon la revendication 1, **caractérisé en ce que** le réservoir tampon de température (13) est rempli d'un liquide, comprend une entrée reliée à la première canalisation (21) et est relié à la conduite d'alimentation en eau principale (23) par l'intermédiaire de la deuxième canalisation (22), de manière à être relié fluidiquement au générateur de vapeur (11).

3. Système d'évacuation de chaleur résiduelle selon la revendication 2, **caractérisé en ce qu'**une distance verticale entre le dispositif d'échange de chaleur (12) et le réservoir tampon de température (13) est inférieure à une distance verticale entre le réservoir tampon de température (13) et le générateur de vapeur (11), le premier capteur de pression (31) est prévu à proximité d'une sortie du dispositif d'échange de chaleur (12), et le second capteur de pression (32) est prévu adjacent à la vanne de régulation de débit (34).

4. Système d'évacuation de chaleur résiduelle selon la revendication 3, **caractérisé en ce que** le capteur de température (33), le second capteur de pression (32) et la vanne de régulation de débit (34) sont prévus séquentiellement sur la deuxième canalisation (22) le long d'une direction d'écoulement du liquide, et une vanne d'isolement de sortie (14) pour intercepter le liquide est également prévue entre la vanne de régulation de débit (34) et la conduite d'alimentation en eau principale (23).

5. Système d'évacuation de chaleur résiduelle selon la revendication 4, **caractérisé en ce que** le dispositif d'échange de chaleur (12) est relié à la conduite de vapeur principale (24) par l'intermédiaire d'une troisième canalisation (25), et une vanne d'isolement d'entrée (15) pour intercepter la vapeur est également prévue entre le dispositif d'échange de chaleur (12) et une conduite de vapeur principale (24).

6. Système d'évacuation de chaleur résiduelle selon la revendication 5, **caractérisé en ce qu'**au moins deux de ces vannes d'isolement d'entrée (15) sont prévues en parallèle sur la troisième canalisation (25), et au moins deux de ces vannes d'isolement de sortie (14) sont prévues en parallèle sur la deuxième canalisation (22).

7. Système d'évacuation de chaleur résiduelle selon la revendication 5, **caractérisé en ce que** le dispositif d'échange de chaleur (12) comprend des tubes d'échange de chaleur (121) et un réservoir d'eau de piégeage de chaleur (122) rempli d'un liquide de refroidissement, les tubes d'échange de chaleur (121) étant immergés dans le liquide de refroidissement, et la première canalisation (21) et la troisième canalisation (25) étant chacune reliées aux tubes d'échange de chaleur (121).

8. Système d'évacuation de chaleur résiduelle selon la revendication 7, **caractérisé en ce que** le réservoir d'eau de piégeage de chaleur (122) est également pourvu d'une fenêtre d'air (1221) à son sommet pour l'évaporation du liquide de refroidissement, et les tubes d'échangeur de chaleur (121) sont des tubes d'échange de chaleur en forme de C.

9. Système d'évacuation de chaleur résiduelle selon la revendication 2, **caractérisé en ce que** le liquide dans le réservoir tampon de température (13) est de l'eau liquide, et l'eau liquide remplit le réservoir tampon de température (13) lorsque le système d'évacuation de chaleur résiduelle n'a pas encore commencé à fonctionner.

10. Système d'évacuation de chaleur résiduelle selon la revendication 9, **caractérisé en ce que** la première canalisation (21) est reliée au réservoir tampon de température (13) au niveau d'une surface supérieure du réservoir tampon de température (13), la deuxième canalisation (22) est reliée au réservoir tampon de température (13) au niveau d'une surface latérale du réservoir tampon de température (13), et la deuxième canalisation (22) est reliée à une partie supérieure de la surface latérale du réservoir tampon de température (13).

11. Système d'évacuation de chaleur résiduelle selon la revendication 1, **caractérisé en ce que** le premier capteur de pression (31) est prévu à une sortie du liquide de condensation, et le second capteur de pression (32) est prévu adjacent à la vanne de régulation de débit (34).

12. Système d'évacuation de chaleur résiduelle selon la revendication 1, **caractérisé en ce que** le premier capteur de pression (31), le capteur de température (33), le second capteur de pression (32) et la vanne de régulation de débit (34) sont prévus séquentiellement sur une conduite de retour du liquide de condensation le long de la direction de retour du condensat.

13. Procédé de stabilisation d'écoulement pour un système d'évacuation de chaleur résiduelle, **caractérisé en ce que** le système d'évacuation de chaleur résiduelle comprend le système d'évacuation de chaleur résiduelle selon l'une quelconque des revendications 1 à 12, le procédé comprenant également les étapes suivantes :
S1, le démarrage du système d'évacuation de chaleur résiduelle et la définition d'un niveau d'eau cible H, dans lequel le niveau d'eau cible H est égal à une différence de hauteur Δ*H* entre le premier capteur de pression (31) et le second capteur de pression (32) ;
S2, le dispositif de commande (35) recevant des données de pression de positions correspondantes mesurées par le premier capteur de pression (31) et le second capteur de pression (32), et une valeur de température détectée par le capteur de température (33), respectivement, et l'obtention d'un niveau d'eau relatif h dans la ligne à cet instant selon la formule Δ*P = ρgh* après avoir obtenu la densité de l'eau de condensation par calcul ;
S3, le dispositif de commande (35) comparant une différence entre le niveau d'eau relatif h et le niveau d'eau cible H, de manière à commander une ouverture de vanne de la vanne de régulation de débit de sorte que le niveau d'eau relatif h soit égal au niveau d'eau cible H, ou que la différence entre le niveau d'eau relatif h et le niveau d'eau cible H soit dans une plage d'erreur prédéfinie ;
S4, lorsque h < H, le dispositif de commande (35) commande automatiquement la vanne de régulation de débit pour réduire l'ouverture de la vanne ;
S5, lorsque h > H, le dispositif de commande (35) commande automatiquement la vanne de régulation de débit pour augmenter l'ouverture de la vanne.

14. Procédé de stabilisation d'écoulement pour un système d'évacuation de chaleur résiduelle selon la revendication 13, **caractérisé en ce qu'**il comprend également un procédé de réglage de la puissance d'évacuation de chaleur du système d'évacuation de chaleur résiduelle, comprenant les étapes suivantes :
S1, le démarrage du système d'évacuation de chaleur résiduelle ;
S2, lorsqu'il est nécessaire de réduire la puissance d'évacuation de chaleur du système d'évacuation de chaleur résiduelle, la définition d'un niveau d'eau cible H supérieur à la différence de hauteur Δ*H* entre le premier capteur de pression (31) et le second capteur de pression (32), l'augmentation du niveau d'eau dans la première canalisation (21) jusqu'à ce que les tubes d'échange de chaleur (121) soient partiellement immergés en réduisant l'ouverture de la vanne de régulation de débit (34) par l'intermédiaire du dispositif de commande (35), pour réduire une zone d'échange de chaleur des tubes d'échange de chaleur (121) de manière à réduire la puissance d'évacuation de chaleur du système d'évacuation de chaleur résiduelle ;
S3, lorsqu'il est nécessaire d'augmenter la puissance d'évacuation de chaleur du système d'évacuation de chaleur résiduelle, la diminution de la valeur du niveau d'eau cible H en augmentant l'ouverture de la vanne de régulation de débit (34) par l'intermédiaire du dispositif de commande (35), pour diminuer la hauteur du niveau d'eau dans les tubes d'échange de chaleur (121) pour augmenter la surface d'échange de chaleur des tubes d'échange de chaleur (121), de manière à augmenter la puissance d'évacuation de chaleur du système d'évacuation de chaleur résiduelle.
